# EUROPÄISCHE PATENTSCHRIFT

(11) **EP 0 704 777 B1**
(45) Veröffentlichungstag und Bekanntmachung des Hinweises auf die Patenterteilung: **03.03.1999**
(21) Anmeldenummer: 95115331.1
(22) Anmeldetag: 28.09.1995
(51) Int. Cl.: G05B 13/02, F01K 17/02

(54) **Verfahren zur Last- und Energieverteilung einer Industrieanlage sowie zugehörige Anordnung**
Load and energy management method for an industrial plant and arrangement therefor
Procédé pour la répartition de charge et d'énergie dans une installation industrielle et dispositif pour sa mise en oeuvre

(30) Priorität: 30.09.1994 DE 4435044
(43) Veröffentlichungstag der Anmeldung: 03.04.1996
(73) Patentinhaber: SIEMENS AKTIENGESELLSCHAFT, 80333 München (DE)
(72) Erfinder: Furumoto, Herbert, Dr., D-91052 Erlangen (DE); Abel, Tilman, Dipl.-Ing., D-90459 Nürnberg (DE)

(56) Entgegenhaltungen:
- US-A- 4 628 462
- AUTOMATISIERUNGSTECHNISCHE PRAXIS - ATP, Bd. 35, Nr. 5, 1.Mai 1993 Seiten 306-309, XP 000369648 BORK P ET AL 'FUZZY CONTROL ZUR OPTIMIERUNG DER KUEHLWASSERAUFBEREITUNG AN EINER CHEMIE-REAKTORANLAGE FUZZY CONTROL OPTIMIZATION OF THE COOLING WATER PREPARATION FOR A CHEMICAL REACTOR PLANT'
- ROBOTICS, CIM AND AUTOMATION, EMERGING TECHNOLOGIES, SAN DIEGO, NOV. 9 - 13, 1992, Bd. 2 OF 3, 9.November 1992 INSTITUTE OF ELECTRICAL AND ELECTRONICS ENGINEERS, Seiten 624-629, XP 000356706 JARMO FRANSSILA ET AL 'FUZZY CONTROL OF AN INDUSTRIAL ROBOT IN TRANSPUTER ENVIRONMENT'
- PATENT ABSTRACTS OF JAPAN vol. 18 no. 113 (E-1514) ,23.Februar 1994 & JP-A-05 308727 (DAIOO ENG KK) 19.November 1993,
- BWK BRENNSTOFF WARME KRAFT, Bd. 41, Nr. 6, Juni 1989 Seiten 273-277, XP 000027996 FUIERER P ET AL 'TAGESEINSATZOPTIMIERUNG FUR KRAFTWERKS-SYSTEME MIT KRAFT-WARME-KOPPLUNG'

## Beschreibung

Die Erfindung bezieht sich auf ein Verfahren zur Last- und Energieverteilung bei einer Industrieanlage, bei der eine Mehrzahl von Dampferzeugern zur Dampfproduktion und eine Mehrzahl von Turbinen zur Elektroenergieerzeugung vorhanden sind und bei der eine oder mehrere Teilanlagen, z.B. Dampfturbinen mit angeschlossenen Dampfverbrauchern mit lokal unterschiedlichem Verbrauch, betrieben werden. Daneben bezieht sich die Erfindung auf eine Anordnung zur Durchführung des angegebenen Verfahrens. Als Industrieanlage ist dabei insbesondere eine Produktionsanlage zu verstehen.

Zum Betrieb vieler Produktionsanlagen ist neben Elektroenergie meist auch Prozeßdampf notwendig. Ein Beispiel hierfür ist eine Aluminiumhütte: Zur Erzeugung von einer Tonne (1 t) Aluminiums sind ca. 20 000 kWh Strom notwendig, wogegen z. B. für die Behandlung des Bauxits im Autoklaven Prozeßdampf erforderlich ist. Ein Beispiel speziell für die Anwendung von Prozeßdampf ist eine Papierfabrik, bei der zeitlich variabel unterschiedliche Dampfmengen benötigt werden. Der Dampf wird in Dampfkesseln erzeugt, die mit Primärenergieträgern wie Öl oder Gas befeuert werden oder aber die Abwärme der Produktionsprozesse nutzen.

In der Praxis ist davon auszugehen, daß allgemein bei Industrieanlagen den Verbrauchern entsprechend unterschiedliche Dampfdrucknetze vorhanden sind, von denen die einzelnen Verbraucher diskontinuierlich Dampf entnehmen. Daneben gibt es einen diskontinuierlichen Verbrauch an Elektroenergie. Im Rahmen einer Prozeßoptimierung erfordert beides einen erhöhten Regelaufwand sowohl bei den Dampferzeugern als auch bei der Elektroenergieerzeugung und -verteilung.

Aus der US-A-4 628 462 ist eine Optimierungsmethode und eine zugehörige Vorrichtung zum Betreiben einer Anlage zur Dampferzeugung einerseits und zur Energieerzeugung andererseits bekannt. Im einzelnen wird zur parallelen bedarfsabhängigen Erzeugung von Dampf einerseits und elektrischer Energie andererseits ein Computersystem verwendet, mit dem die einzelnen Meßgrößen rechentechnisch verarbeitet werden und nach einer entsprechenden Vorschrift einzelner Ausgangssignale zum parallelen Betrieb der Dampferzeugung einerseits und der Energieerzeugung andererseits geliefert werden.

Aufgabe der Erfindung ist es demgegenüber, ein Verfahren sowie die zugehörige Anordnung anzugeben, welche in einer Industrieanlage eine optimale Verteilung der Last auf die vorhandenen Kessel und Turbinen ermöglichen und dabei die Anforderungen, die aus dem unterschiedlichen Bedarf an Elektroenergie und Prozeßdampf berücksichtigen. Gegebenenfalls soll auch die Energiesituation eines externen Energienetzes berücksichtigt werden.

Die Aufgabe ist erfindungsgemäß dadurch gelöst, daß innerhalb einer Industrieanlage mit einer Mehrzahl von Dampfkesseln und Dampfturbinen zur Lastverteilung auf die einzelnen Kessel und/oder Turbinen Fuzzy-Logik eingesetzt wird, wobei zur Aufstellung bzw. Formulierung von Fuzzy-Regeln der Elektroenergiebedarf einerseits und der Dampfbedarf andererseits der einzelnen Teilanlagen berücksichtigt wird und wobei die Wirkungskennlinien der einzelnen Kessel einerseits und der einzelnen Turbinen andererseits herangezogen werden. Gegebenenfalls kann bei den Fuzzy-Regeln zusätzlich die Energiesituation des externen Elektroenergienetzes eingehen. Im einzelnen werden vorzugsweise Fuzzy-Regeln aus den Anlageerfahrungen verwendet. Die Fuzzy-Regeln können aber auch aus Prozeßdaten gelernt werden. Dabei ist es vorteilhaft, von einer Anfangsstruktur der Fuzzy-Regeln auszugehen und diese Regeln während des Betriebs der Anlage zu erweitern bzw. die Zugehörigkeitsfunktion anzupassen.

Vom Stand der Technik ist zwar der Einsatz von Fuzzy-Logik für einfache Aufgaben bereits bekannt. Insbesondere in Automatisierungstechnische Praxis, Bd. 35, Nr. 5 (5. Mai 1993), Seiten 306 bis 309, wird der Einsatz von Fuzzy-Logik speziell zur Optimierung der Kühlwasseraufbereitung in einer Chemiereaktoranlage beschrieben. Aus Proceedings of the 1992 International Conference Industrial Electronics, Control, Instrumentations and Automation, Bd. 2/3 (November 1992), Seiten 624 bis 629, ist daneben eine Einrichtung zur Fuzzy-Control eines Industrieroboters bekannt, bei dem in bekannter Weise eine Fuzzifizierung, ein sogenanntes Regelwerk und eine Defuzzifizierung, vorhanden sind, mit dem entsprechend gelernter Regeln ein Roboter betrieben werden kann.

Bei der Erfindung geht in jedem Fall in die Fuzzy-Regeln der Dampfverbrauch der einzelnen Verbraucher und der Elektroenergiebedarf der Verbraucher ein. Davon abgesehen können die Fuzzy-Regeln Informationen der einzelnen Energieabnehmer zu ihrem aktuellen Elektroenergie- und/oder Dampfbedarf, ihrem jetzigen und zukünftigen Energiestatus sowie auch die Dringlichkeit der Energielieferung für die Aufrechterhaltung der Produktion enthalten. Außerdem kann die Dringlichkeit der Energielieferung an das externe Elektroenergienetz zur Stützung hinterlegt werden. Die dafür benötigten Informationen werden aus Online-Meßdaten gewonnen. Eine Bewertung der Energiesituation des externen Energienetzes kann durch zusätzliche Systeme unter Verwendung neuronaler Netze erfolgen.

Eine erfindungsgemäße Anordnung ist durch ein Fuzzy-System mit wenigstens einem Fuzzy-Regler gekennzeichnet, wobei die Eingänge den Dampf- und Energiebedarf der Teilanlagen einerseits und die Energiesituation des externen Netzes sowie der Gesamtanlage andererseits beinhalten und wobei die Ausgänge die Dampf- und Energieverteilung auf die Teilanlagen angeben. Vorzugsweise kann auch die Energieverteilung eines externen Netzes berücksichtigt werden.

Durch die gleichzeitige Berücksichtigung von Dampf- und Elektroenergieverbrauch und die optimale Verteilung der Last auf die vorhandenen Dampferzeuger und Turbinen unter Berücksichtigung der gegenwärtigen und ggfs. auch der zukünftigen Energiesituation des gesamten Netzes ist eine Erhöhung des Gesamtwirkungsgrades des Produktionsprozesses und eine Steigerung des betriebswirtschaftlichen Gesamtergebnisses der Industrieanlage möglich. Dampferzeuger und Turbinen, die zeitweise außer Betrieb sind ("hot stand by"), lassen sich bei der Bewertung der sich entwickelnden Gesamtenergiesituation aus internen und externen Verbrauchsdaten mit einbeziehen.

Weitere Einzelheiten und Vorteile der Erfindung ergeben sich aus der nachfolgenden Figurenbeschreibung von Ausführungsbeispielen anhand der Zeichnung. Es zeigen jeweils als Funktionsschaubild
- FIG 1: die Last- und Energieverteilung bei einer Aluminiumhütte als eine Industrieanlage mit einer Mehrzahl von Dampferzeugern einerseits und Dampfturbinen andererseits mit nachgeschalteten Verbrauchern an Prozeßdampf einerseits und Elektroenergie andererseits sowie einer Verbindung zum externen Elektroenergienetz,
- FIG 2: die Dampferzeugung bei einer Papierfabrik als Industrieanlage mit einer Mehrzahl von Dampfkesseln für vorwiegend Prozeßdampfverbrauch,
- FIG 3: ein Diagramm, das den typischen Verlauf des Dampfverbrauches und Dampfdruckes in einer Anlage gemäß Figur 2 wiedergibt,
- FIG 4: ein Fuzzy-System zur Steuerung von Industrieanlagen gemäß Figur 1 und/oder Figur 2,
- FIG 5 und FIG 6: die Wirkungskennlinien eines Kessels einer-seits und einer Turbine andererseits, sowie
- FIG 7 und 8: die für die Fuzzifizierung bei einem Fuzzy-System gemäß Figur 4 notwendigen Zugehörigkeitsfunktionen.

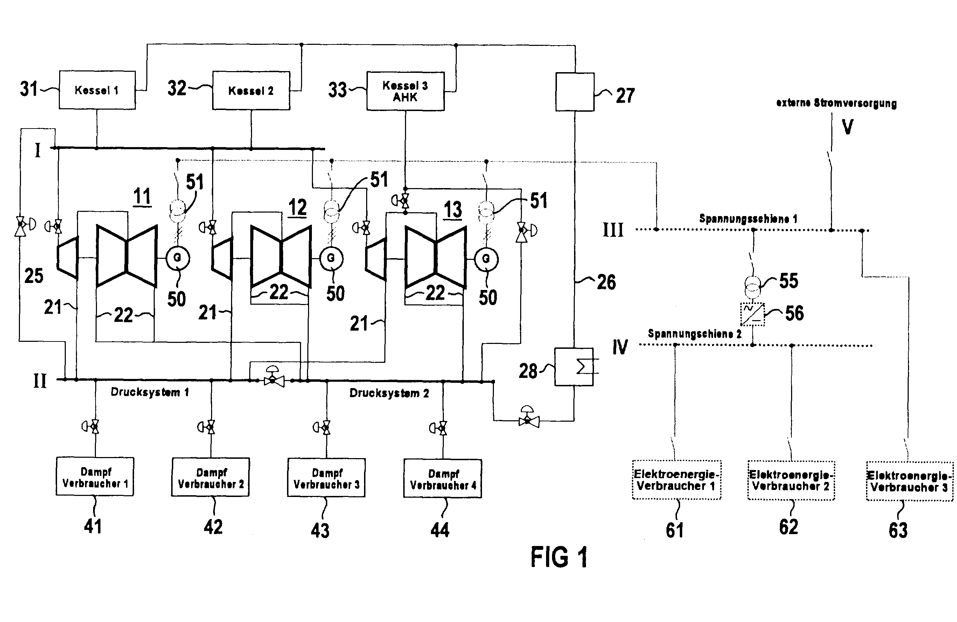

In Figur 1 ist sind zwei Dampfdruckschienen für unterschiedliche Dampfdrucke und zwei Spannungsdruckschienen für unterschiedliche Spannungen dargestellt. Solche Systeme mit unterschiedlichen Dampfdruckschienen einerseits und Spannungsschienen andererseits findet man häufig in Anlagen, bei denen die Verbraucher unterschiedliche Dampfdrücke und elektrische Spannungsversorgungen unterschiedlich fordern.

In Figur 1 ist ein erstes Drucksystem mit Dampfverbrauchern 41 und 42 gekennzeichnet, in das Dampfturbinen 11 und 12 Dampf abgeben. Ein zweites Drucksystem mit Dampfverbrauchern 43 und 44 ist durch 2 gekennzeichnet und wird teilweise von der Dampfturbine 12 und ganz von der Dampfturbine 13 gespeist. Die Kapazität der einzelnen Dampfturbinen 11 bis 13 ist sowohl elektrisch als auch dampfseitig verschieden. Dazu versorgen beispielsweise mit Gas gefeuerte Kessel 31 und 32 über eine Sammelschiene I die Dampfturbinen 11 bis 13 mit Dampf. Weiterhin wird mit Prozeßabwärme erzeugter Dampf aus dem Kessel 33 der Dampfturbine 13 zugegeben. Die Dampfturbinen 11 bis 13 speisen jeweils über ihre Anzapfungen 21 das Drucksystem 1 mit höherem Druck, während über die Anzapfungen 22 das Drucksystem 2 mit niedrigerem Druck versorgt wird. Mit Hilfe von Bypässen 25 und 26 und zugehörigen Stelleinheiten 27 und 28 zu den Dampfturbinen 11 bis 13 ist eine Dampfversorgung der Dampfverbraucher 41 bis 44 auch bei abgeschalteten Dampfturbinen 11 möglich. Die dafür notwendigen Ventilanordnungen sind nicht im einzelnen bezeichnet. Insgesamt werden bei dieser Anlage zum bestimmungsgemäßen Betrieb einer Aluminiumhütte die Dampfverbräuche verschiedener Verbraucher, z.B. der Autoklaven mit unterschiedlichem Dampfmengenbedarf, abgedeckt.

Den Dampfturbinen 11 bis 13 sind jeweils gleiche Generatoren 50 nachgeschaltet, wobei der im Generator 50 erzeugte Strom über Blocktransformatoren 51 in eine erste Spannungsschiene III eingespeist wird. An die Schiene III ist über eine Spannungsschiene 5 ein externes Netz angekoppelt, von dem benötigte Elektroenergie bezogen, aber an das auch elektrische Energie abgegeben werden kann. Von der Spannungsschiene III erfolgt über einen Transformator 55 mit nachgeschaltetem Gleichrichter 56 die Anbindung an eine zweite Spannungsschiene IV für Gleichstrom, von der Verbraucher 61 bis 62 mit niedrigerer Gleichspannung gespeist werden. Solche Verbraucher sind in einer Aluminiumhütte z.B. die für die Elektrolyse benötigten Wannenöfen. Dem Verbraucher 63 steht eine demgegenüber höhere Wechselspannung zur Verfügung.

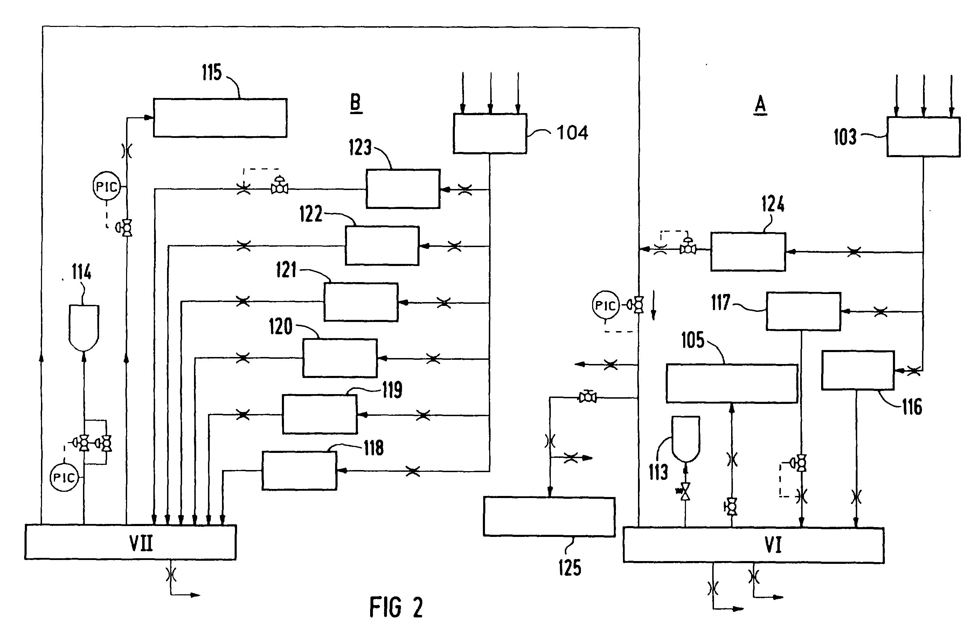

In Figur 2 ist ein erster Dampfkreislauf A für einen Dampfdruck von beispielsweise 9 bar und ein zweiter Dampfkreislauf B für einen zweiten Dampfdruck von beispielsweise 13 bar wiedergegeben. Solche unterschiedliche Dampfkreisläufe werden häufig in Papierfabriken verwendet. Letzteres ergibt sich speziell dann, wenn beispielsweise durch Erweiterung Kessel nach- und umgerüstet werden. In den einzelnen, in FIG 2 durchnumerierten Druckleitungen sind jeweils Ventile eingebaut, die teilweise steuerbar sind, worauf hier nicht im einzelnen eingegangen wird. Darüber hinaus sind jeweils einer vorgegebenen Anzahl von Kesseln einzelne Kondensatabscheider 103, 104, Überdruckventil-Einrichtungen 113, 114 zum Ablassen nicht benötigten Dampfes sowie Anzeigeeinheiten 105, 115, 125 zugeordnet. Es sind Dampfdruckschienen VI und VII mit unterschiedlichen Dampfdrücken vorhanden, die im wesentlichen den Dampfdruckschienen I und II der FIG 1 entsprechen.

Im einzelnen sind in FIG 2 dem ersten Drucksystem A drei Dampfkessel 116, 117 und 124 zugeordnet, die unterschiedliche Leistungen haben, beispielsweise der Kessel 116 speziell 4 t/h, der Kessel 117 speziell 25 t/h und der Kessel 124 ebenfalls speziell 25 t/h. Dem Drucksystem B mit dem höheren Dampfdruck sind insgesamt sechs Kessel 118 bis 123 zugeordnet, deren Leistung sich beispielsweise zwischen 3 t/h und 20 t/h bewegt. Insgesamt werden damit die bei unterschiedlichen Papiermaschinen jeweils erforderlichen Dampfmengen abgedeckt.

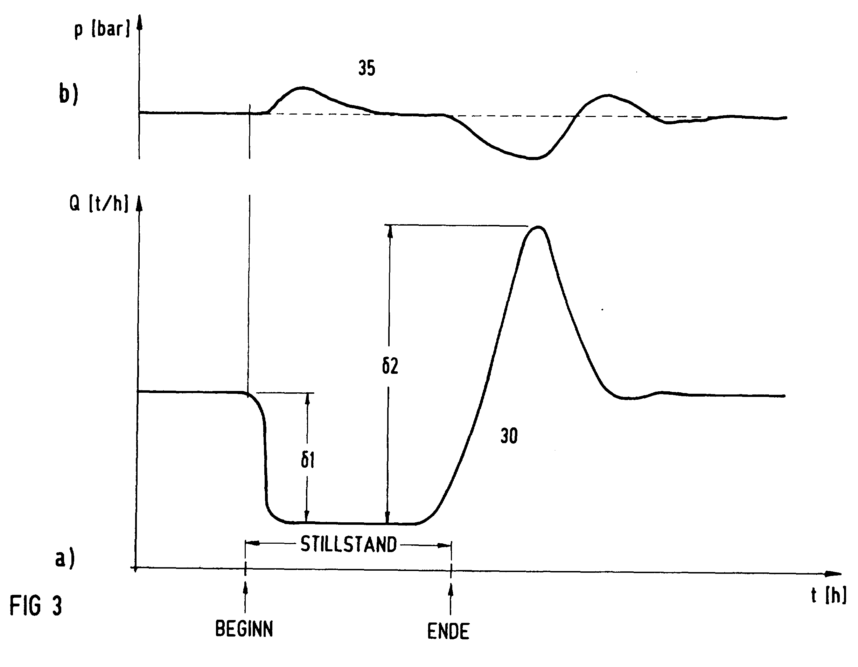

Im Diagramm der Figur 3 kennzeichnet die Abszisse die Zeit t. Auf der Ordinate ist in der Teilfigur 3a der Dampfverbrauch Q als Massestrom M=***ṁ*** und in der Teilfigur 3b der Dampfdruck p aufgetragen, wobei willkürliche Einheiten gewählt sind. Die diesbezüglichen Graphen sind mit 30 und 35 bezeichnet und geben somit beispielhaft den zeitlichen Verlauf des Dampfverbrauches bzw. des zugehörigen Dampfdruckes in einer Papiermaschine wieder.

Aus den Darstellungen in Figur 3 wird deutlich, daß es bei Stillstand einer Papiermaschine zu einem verminderten Dampfverbrauch kommt, der eine bestimmte Zeit andauern kann. Die Verminderung δ1 im Dampfverbrauch kann dabei in der Größenordnung von 8 - 40 t/h liegen. Bei Wiederaufnahme der Produktion steigt der Dampfverbrauch stark an und kann bis zu δ2 > 2 δ1 hochgehen. Diesen erhöhten Dampfverbrauch muß die Dampferzeugungsanlage gemäß Figur 2 ausgleichen. Erst nach dem steilen Anstieg pendeln sich die Verhältnisse wieder auf den ursprünglichen Ausgangswert des Normal zustandes ein, da für das Anheizen von Anlageteilen zusätzlicher Dampf benötigt wird.

Die Druckkurve der Figur 3b zeigt analog zum Dampfverbrauch entsprechende Abweichungen vom Normalzustand, welche aber umgekehrte Tendenz haben. So steigt bei vermindertem Dampfverbrauch Q naturgemäß der Dampfdruck p und nähert sich erst nach Überschreiten eines Maximums dem gestrichelten Sollwert. Bei sich daran anschließendem, wieder erhöhtem Dampfverbrauch sinkt der Dampfdruck p zunächst unter den Sollwert, um sich dann nach Pendeln um den Sollwert asymptotisch an letzteren anzunähern.

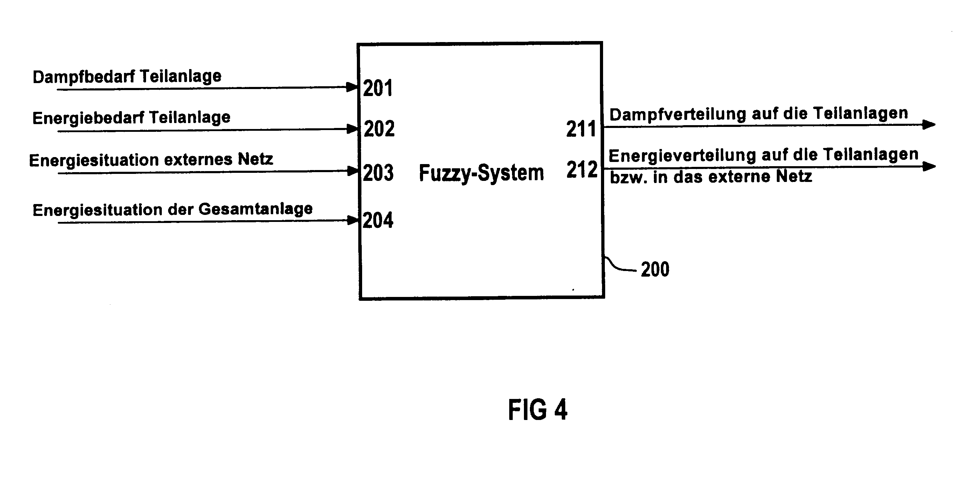

In Figur 4 ist ein Fuzzy-Regler 200 mit Eingängen 201 bis 204 und Ausgängen 211 und 212 dargestellt. Der Eingang 201 beinhaltet den Dampfverbrauch aller Teilanlagen, der Eingang 202 den Elektroenergiebedarf der Teilanlagen, der Eingang 203 die Energiesituation der gesamten Industrieanlage und der Eingang 204 die Energiesituation des externen Netzes. Die Fuzzifizierung erfolgt entsprechend vorgegebener Regeln. Der Ausgang 211 gibt die Dampfverteilung und der Ausgang 212 die Energieverteilung auf die Teilanlagen an. Gegebenenfalls kann eine Energierückkopplung in das externe Netz vorgesehen sein.

Mit dem Fuzzy-Regler 200 ist es nunmehr möglich, die Dampfund die Elektroenergieverteilung derart vorzunehmen, daß gleichermaßen die augenblicklich benötigte Dampfmenge und der Elektroenergiebedarf (intern/extern) so gesteuert wird, daß der Gesamtwirkungsgrad der Industrieanlage erhöht wird und das wirtschaftliche Gesamtergebnis der Industrieanlage maximiert wird.

Speziell bei Anwendung in Papierfabriken können die Eingänge 201 bis 204 des Fuzzy-Reglers 200 den Dampfverbrauch von den vorhandenen Papiermaschinen einerseits und Produktionsunterbrechungen einzelner Papiermaschinen andererseits beinhalten. Ein solcher Produktionsausfall berücksichtigt insbesondere den sog. Abriß in der Papierbahn bzw. dessen Dauer, wobei unmittelbar der Dampfverbrauch erniedrigt wird.

Während bisher in der Praxis des Produktionsbetriebes häufig bei Störungen von den Kesseln gelieferter Prozeßdampf ungenutzt abgeblasen wurde, können nunmehr Ausfälle von Teilanlagen durch eine Neuverteilung der Last auf die einzelnen Kessel kompensiert werden. Dies gilt insbesondere beim Ersatz einer ersten Papiermaschine durch andere Papiermaschinen während des Produktionsprozesses. Aber auch bei Unterbrechungen, bspw. durch den Abriß der Papierbahn in der laufenden Papiermaschine, kommt es zu vermindertem Dampfverbrauch. Die Dauer solcher regelmäßiger Störungen kann durch Formulierung entsprechender Regeln im Fuzzy-System mit berücksichtigt werden.

Mit dem Fuzzy-Regler 200 ist es möglich, die Lastverteilung aller Papiermaschinen derart vorzunehmen, daß gleichermaßen die augenblicklich benötigte Dampfmenge und die bei Wiederanfahren benötigte Dampfmenge auf die vorhandenen Kessel 106 bis 114 verteilt wird bzw. einzelne Kessel 106 bis 114 zu- und abgeschaltet werden.

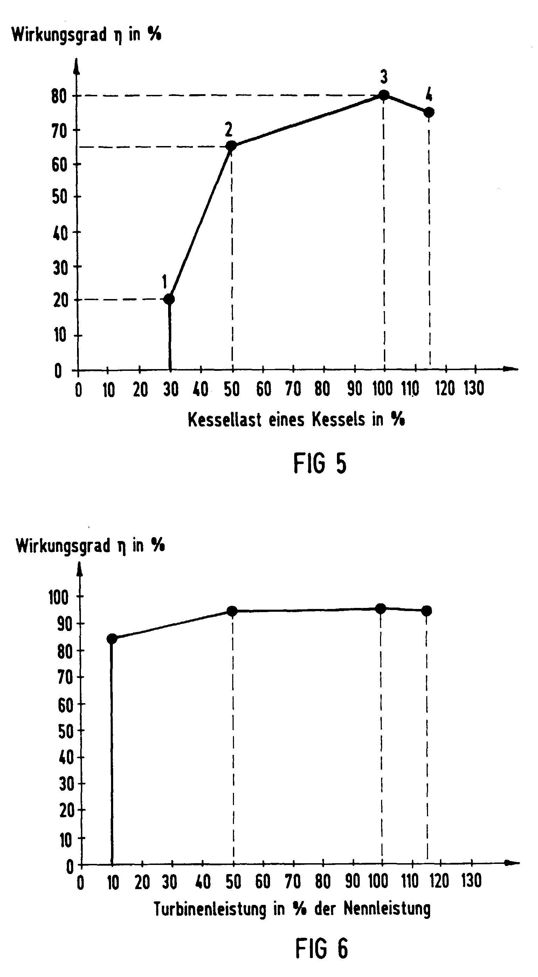

In Figur 5 ist eine Wirkungskennlinie eines einzelnen Kessels beispielhaft dargestellt. Aufgetragen ist der Wirkungsgrad über der Kessellast des Kessels in Prozent, wobei sich bei 100 % Kessellast naturgemäß ein Maximum in der Wirkungskennlinie ergibt. Die zugehörigen Punkte 1 bis 4 wurden von einem mit Gas betriebenen Kessel ermittelt. Im Prinzip ergeben sich bei Verwendung anderer fossiler Energieträger entsprechende Kennlinien, wobei jeweils der Einsatzpunkt 1 verschoben ist, d.h. beispielsweise für Braunkohle nicht bei 20 %, sondern bei 50 % Wirkungsgrad beginnt.

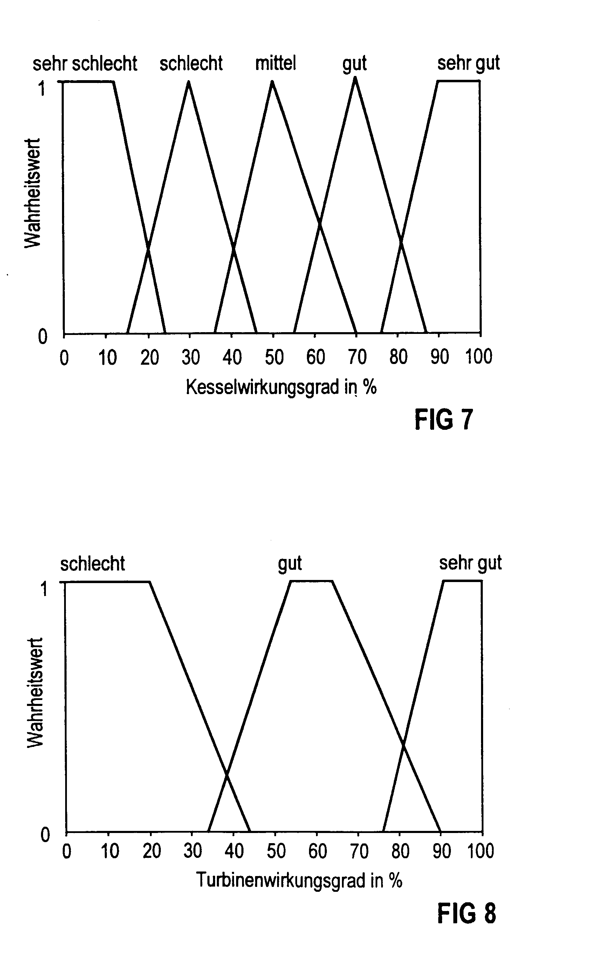

Aus der Wirkungskennlinie des Kessels sind in Figur 7 entsprechende Zugehörigkeitsfunktionen abgeleitet worden. Zur Formulierung der Fuzzy-Regeln erscheint es sinnvoll, Zugehörigkeitsfunktionen für die Zustände "sehr schlecht", "schlecht", "mittel", "gut" und "sehr gut" zu definieren, wobei sich entsprechende Wahrheitswerte ergeben.

Sinngemäß Entsprechendes ist in den Figuren 6 und 8 beispielhaft für eine Turbine dargestellt: Der Wirkungsgrad einer Turbine liegt üblicherweise zwischen 80 und 95 %, wobei bereits bei 10 % Turbinenleistung ein Wirkungsgrad von 85 % vorliegt, bei 50 % Turbinenleistung ein Wirkungsgrad über 90 % erreicht ist und das Maximum wiederum bei 100 % liegt. Daraus lassen sich entsprechende Zugehörigkeitsfunktionen gemäß Figur 6 ableiten, wobei sich für die Turbinen drei Eigenschaften "schlecht", "gut" und "sehr gut" als geeignet erweisen.

Durch Einbindung dieser Zugehörigkeitsfunktionen in das Fuzzy-System 400 nach Figur 4 lassen sich entsprechende Fuzzy-Regeln formulieren. Dabei werden üblicherweise einmal Regeln aus der Anlagenerfahrung verwendet; sie können aber auch aus Prozeßdaten gelernt werden. Dabei ist es vorteilhaft, von einer Anfangsstruktur der Fuzzy-Regeln auszugehen und diese Regeln beim laufenden Betrieb der Anlage zu erweitern. Entsprechend können die Zugehörigkeitsfunktionen angepaßt werden.

Durch Hinzunahme weiterer Bewertungssysteme, wie die Verwendung neuronaler Netze od. dgl., kann auch die externe Energiesituation berücksichtigt werden. Gegebenenfalls kann nicht benötigter Dampf zur Elektronenenergieerzeugung ausgekoppelt werden. Somit läßt sich der Wirkungsgrad der Anlage weiter erhöhen.

## Patentansprüche

1. Verfahren zur Last- und Energieverteilung bei einer Industrieanlage, bei der eine Mehrzahl von Dampfkesseln zur Dampferzeugung und eine Mehrzahl von Turbinen zur Elektroenergieerzeugung vorhanden sind, wobei jeweils mehrere Teilanlagen mit lokal unterschiedlichem Dampfbedarf betrieben werden und eine Anbindung an ein externes Energienetz besteht, **dadurch gekennzeichnet,** daß zur Lastverteilung auf die einzelnen Kessel und/oder Turbinen Fuzzy-Logik eingesetzt wird, wobei zur Aufstellung bzw. Formulierung von Fuzzy-Regeln der Elektroenergiebedarf einerseits und der Dampfbedarf andererseits der einzelnen Teilanlagen berücksichtigt wird und wobei die Wirkungskennlinien der einzelnen Kessel einerseits und der einzelnen Turbinen andererseits herangezogen werden.

2. Verfahren nach Anspruch 1, **dadurch gekennzeichnet ,** daß die Festlegung von Zugehörigkeitsfunktionen und/oder Fuzzy-Regeln aus der Anlagenerfahrung erfolgt.

3. Verfahren nach Anspruch 1, **dadurch gekennzeichnet,** daß Zugehörigkeitsfunktionen und/oder die Fuzzy-Regeln aus Prozeßdaten gelernt werden.

4. Verfahren nach Anspruch 2 und/oder Anspruch 3, **dadurch gekennzeichnet,** daß von einer Anfangsstruktur der Fuzzy-Regeln ausgegangen wird und die Regeln bzw. die Zugehörigkeitsfunktionen bei laufendem Betrieb der Industrieanlage angepaßt werden.

5. Verfahren nach Anspruch 1, **dadurch gekennzeichnet,** daß bei den Fuzzy-Regeln zusätzlich die Energiesituation des externen Elektroenergienetzes eingeht.

6. Verfahren nach Anspruch 5 **dadurch gekennzeichnet,** daß die Bewertung der Energiesituation des externen Energienetzes durch zusätzliche Systeme, vorzugsweise unter Verwendung von neuronalen Netzen, erfolgt.

7. Verfahren nach einem der vorhergehenden Ansprüche, **gekennzeichnet** in der Anwendung bei einer Aluminiumhütte.

8. Verfahren nach einem der vorhergehenden Ansprüche, **gekennzeichnet** in der Anwendung bei einer Zellstoff- und Papierfabrik.

9. Verfahren nach Anspruch 8, **dadurch gekennzeichnet,** daß bei einer Papierfabrik Störungen in der Lastverteilung durch einen Abriß in der Papierbahn bewirkt werden.

10. Anordnung zur Last- und Energieverteilung bei einer Industrieanlage unter Verwendung des Verfahrens nach Anspruch 1 oder einem der Ansprüche 2 bis 9, wobei eine Mehrzahl von Dampfkesseln zur Dampferzeugung und eine Mehrzahl von Turbinen zur Elektroenergieerzeugung vorhanden sind, und jeweils mehrere Teilanlagen mit lokal unterschiedlichem Dampfbedarf betrieben werden, **dadurch gekennzeichnet,** daß zur Lastverteilung auf die einzelnen Kessel und/oder Turbinen ein Fuzzy-System mit wenigstens einem Fuzzy-Regler (200) vorhanden ist, wobei die Eingänge (201 bis 204) den Dampf- und Energiebedarf der Teilanlagen einerseits beinhalten und wobei die Ausgänge (211, 212) die Dampf- und Energieverteilung auf die Teilanlagen angeben und wobei das Fuzzy-System Mittel zur Fuzzyfizierung, die die unterschiedlichen Wirkungskennlinien der in der Industrieanlage vorhandenen kessel und/oder Turbinen berücksichtigen, aufweist.

11. Anordnung nach Anspruch 10, wobei eine Anbindung an ein externes Energienetz besteht, **dadurch gekennzeichnet,** daß ein Eingang des Fuzzy-Reglers (200) auch die Energieverteilung auf das externe Netz beinhaltet.

## Claims

1. Method for load and power distribution in an industrial plant, in which there is a plurality of steam boilers for generating steam and a plurality of turbines for generating electrical power, wherein in each case several plant units with a locally variable steam requirement are operated and there is a connection to an external power supply system, characterized in that fuzzy logic is used for the load distribution among the individual boilers and/or turbines, wherein to set up or formulate fuzzy rules, on the one hand the electrical power requirement and, on the other hand, the steam requirement of the individual plant units is considered, and wherein the effective characteristics of the individual boilers, on the one hand, and the individual turbines, on the other hand, are used.

2. Method according to claim 1, characterized in that association functions and/or fuzzy rules are established from experience of the plant.

3. Method according to claim 1, characterized in that the association functions and/or the fuzzy rules are learned from process data.

4. Method according to claim 2 and/or claim 3, characterized in that one starts with an initial structure of the fuzzy rules, and the rules or the association functions are adapted during continuous operation of the industrial plant.

5. Method according to claim 1, characterized in that the power situation of the external electrical power supply system is additionally included in the fuzzy rules.

6. Method according to claim 5, characterized in that the evaluation of the power situation of the external power supply system takes place by means of additional systems, preferably with the use of neuronal supply systems.

7. Method according to one of the preceding claims, characterized in application in an aluminium works.

8. Method according to one of the preceding claims, characterized in application in a woodpulp works and paper-mill.

9. Method according to claim 8, characterized in that, in a paper-mill, disturbances in the load distribution are effected by a tearing in the paper web.

10. Arrangement for load and power distribution in an industrial plant with the use of the method according to claim 1 or one of claims 2 to 9, wherein there is a plurality of steam boilers for generating steam and a plurality of turbines for generating electrical power, and in each case several plant units with locally variable steam requirement are operated, characterized in that for the load distribution among the individual boilers and/or turbines there is a fuzzy system with at least one fuzzy controller (200), wherein the inputs (201 to 204) include the steam and power requirement of the plant units on the one hand, and wherein the outputs (211, 212) provide the steam and power distribution among the plant units, and wherein the fuzzy system has means for fuzzification which consider the different effective characteristics of the boilers and/or turbines present in the industrial plant.

11. Arrangement according to claim 10, wherein there is a connection to an external power supply system, characterized in that an input of the fuzzy controller (200) also includes the power distribution to the external supply system.

## Revendications

1. Procédé pour la répartition de charge et d'énergie dans une installation industrielle, dans lequel il est prévu une pluralité de générateurs de vapeur pour la production de vapeur et une pluralité de turbines pour la production d'énergie électrique, plusieurs installations partielles fonctionnant avec des besoins en vapeur localement différents et constituant chacun un point d'entrée à un réseau d'énergie extérieur, caractérisé en ce que l'on utilise pour la répartition de charge aux chaudières et/ou aux turbines une logique floue, dans laquelle on prend en compte, pour l'établisement et la formulation des règles de logique floue, les besoins en énergie électrique d'une part et les besoins en vapeur des installations partielles, et dans laquelle on utilise les courbes caractéristiques d'action des chaudières individuelles d'une part et des turbines individuelles d'autre part.

2. Procédé suivant la revendication 1, caractérisé en ce que la détermination des fonctions d'appartenance et/ou des règles de logique floue sont déduites de l'exploitation de l'installation.

3. Procédé suivant la revendication 1, caractérisé en ce que des fonctions d'appartenance et/ou des règles de logique floue sont apprises à partir des données de processus.

4. Procédé suivant la revendication 2 et/ou la revendication 3, caractérisé en ce que les règles de logique floue partent d'une structure de début et les règles ou les fonctions d'appartenance sont adaptées pendant le fonctionnement en cours de l'installation industrielle

5. Procédé suivant la revendication 1, caractérisé en ce que en outre la situation en énergie du réseau extérieur d'énergie électrique entre dans les règles de logique floue.

6. Procédé suivant la revendication 5, caractérisé en ce que l'évaluation de la situation en énergie du réseau extérieur d'énergie a lieu par des systèmes supplémentaires, de préférence en utilisant des réseaux neuronaux.

7. Procédé suivant l'une des revendications précédentes, caractérisé par son utilisation dans une fonderie d'aluminium.

8. Procédé suivant l'une des revendications précédentes, caractérisé par son utilisation dans une papeterie ou dans une usine de pâte chimique.

9. Procédé suivant la revendication 8, caractérisé en ce que dans le cas d'une papeterie on agit sur des perturbations dans la répartition de charge par l'intermédiaire d'une rupture de la bande de papier.

10. Dispositif pour une répartition d'énergie et de charge dans une installation industrielle, en utilisant le procédé suivant la revendication 1 ou l'une des revendications 2 à 9, dans lequel il est prévu une pluralité de chaudières pour la production de vapeur et une pluralité de turbines pour la production d'énergie électrique, plusieurs installations partielles fonctionnant avec des besoins en vapeur localement différents, caractérisé en ce que, pour la répartition de charge entre les chaudières et/ou les turbines, il est prévu un système à logique floue comportant au moins un régulateur (200) à logique floue, les entrées (201 à 204) contenant d'une part les besoins en énergie et les besoins en vapeur des installations partielles et les sorties (211, 212) fournissant les répartitions en vapeur et en énergie aux installations partielles, le système à logique floue comportant des moyens pour fixer une logique floue, qui prennent en compte les différentes courbes caractéristiques d'action des chaudières et/ou turbines présentes dans l'installation industrielle.

11. Dispositif suivant la revendication 10, dans lequel il y a une liaison avec un réseau extérieur d'énergie, caractérisé en ce qu'une entrée du régulateur (200) à logique floue contient également la répartition en énergie sur le réseau extérieur.
